# EUROPÄISCHE PATENTSCHRIFT

(11) **EP 3 931 804 B1**
(45) Veröffentlichungstag und Bekanntmachung des Hinweises auf die Patenterteilung: **05.08.2026**
(21) Anmeldenummer: 20711022.2
(22) Anmeldetag: 23.03.2020
(51) Int. Cl.: G07C 5/00, G07C 5/08

(54) **VORRICHTUNG ZUM ERMITTELN DES IST-ZUSTANDS UND/ODER DER RESTLEBENSDAUER EINER BAU-, MATERIALUMSCHLAGS- UND/ODER FÖRDERMASCHINE**
DEVICE FOR DETERMINING THE ACTUAL STATE AND/OR THE REMAINING SERVICE LIFE OF A CONSTRUCTION, MATERIALS-HANDLING AND/OR CONVEYOR MACHINE
DISPOSITIF POUR DÉTERMINER L'ÉTAT RÉEL ET/OU LA DURÉE DE VIE RÉSIDUELLE D'UNE MACHINE DE CHANTIER, DE MANUTENTION DE MATÉRIAU ET/OU DE TRANSPORT

(30) Priorität: 29.03.2019 DE 102019108278
(43) Veröffentlichungstag der Anmeldung: 05.01.2022
(73) Patentinhaber: Liebherr-Components Biberach GmbH, 88400 Biberach an der Riß (DE)
(72) Erfinder: MUPENDE, Yvon Ilaka, 89231 Neu-Ulm (DE); PARLOW, Jan, 88422 Oggelshausen (DE)
(74) Vertreter: Lorenz Seidler Gossel Part. mbB
(86) Internationale Anmeldenummer: PCT/EP2020/057924
(87) Internationale Veröffentlichungsnummer: WO 2020/200863

(56) Entgegenhaltungen:
- EP-A1- 1 564 688
- EP-A1- 1 724 730
- EP-A1- 3 236 326
- EP-A1- 3 273 414
- US-A1- 2008 140 349
- US-A1- 2011 282 626
- US-A1- 2013 180 319
- US-A1- 2016 266 006

## Beschreibung

Die vorliegende Erfindung betrifft eine Vorrichtung zum Ermitteln des Ist-Zustands und der Restlebensdauer eines Getriebes einer Bau-, Materialumschlags- und/oder Fördermaschine, mit mehreren an der Bau-, Materialumschlags- und/oder Fördermaschine vorgesehenen Sensoren zum Erfassen verschiedener Zustandsinformationen, einer mit den Sensoren verbundenen Erfassungseinrichtung zum Sammeln der erfassten Zustandsinformationen, einer mit der Erfassungseinrichtung verbindbaren Zentraleinheit zum Auswerten der gesammelten Zustands-Informationen zum Ermitteln des Ist-Zustands und der Restlebensdauer aus den gesammelten Zustands-Informationen, sowie einer Anzeigevorrichtung zum Anzeigen des ermittelten Ist-Zustands und der ermittelten Restlebensdauer.

Bei Baumaschinen wie Baggern, Kranen, Muldenkippern, Planierraupen, Bulldozern oder Seilbaggern, oder Materialumschlagsmaschinen oder Förderanlagen wie Staplern und Ladern oder anderen größeren Arbeitsmaschinen wie Oberflächenfräsern oder Schiffskranen ist es gleichermaßen wichtig und schwierig, die Restlebensdauer bzw. die verbleibende Zeitspanne bis zum notwendigen Austausch einer Baumaschinenkomponente vorherzusagen. Fällt eine Baumaschine im Einsatz auf einer Baustelle aus, weil beispielsweise ein Antriebsgetriebe ausfällt, kann oft nicht gleich eine passende Ersatzmaschine beschafft und an die Baustelle angeliefert werden, sodass während der für die Reparatur benötigten Reparaturzeit auf der Baustelle Verzögerungen anfallen, wobei oft nicht nur die Aufgaben der ausgefallenen Baumaschinen selbst liegen bleiben, sondern aufgrund des verzahnten Ineinandergreifens der verschiedenen Baumaschinen auch andere Abläufe Verzögerungen erfahren. Um solche Ausfallsituationen einer Baumaschine zu vermeiden, benötigt die Einsatzplanung eine verlässliche Bestimmung des Ist-Zustands bzw. der verbleibenden Restlebensdauer einer jeweiligen Maschine, um abschätzen zu können, ob die jeweilige Baumaschine den Arbeitszyklus einer Baustelle übersteht oder vorher gewartet werden muss.

Die verlässliche Abschätzung des Ist-Zustands bzw. der verbleibenden Restlebensdauer ist bei einer Baumaschine jedoch sehr schwierig, da die Belastungen und Einsatzbedingungen von Baustelle zu Baustelle sehr stark variieren. Beispielsweise werden Erdbewegungsmaschinen sehr viel stärker belastet, wenn an der Baustelle hartes Gestein zu bewegen ist. Gleichfalls werden Baumaschinen wie Muldenkipper oder Bulldozer an Hanglagen anders belastet als auf ebenen Baustellen. Allgemein führen verschiedene Baustellen zu stark unterschiedlichen Belastungen, was die Abschätzung schwierig macht, ob die Restlebensdauer einer Baumaschine für eine spezielle Baustelle ausreicht. Hinzu kommt, dass Baumaschinen auch sehr unterschiedliche Belastungshistorien aufweisen. Wurde beispielsweise eine Baumaschine zufällig immer auf Baustellen mit starken Belastungen eingesetzt, können übliche Abschätzungen der Restlaufzeit anhand von Betriebsstunden die Restlebensdauer nicht verlässlich vorhersagen.

Es wurden daher bereits sensorische Überwachungssysteme für Baumaschinen vorgeschlagen, die die Bestimmung der Ist-Zustände von Baumaschinen anhand gemessener Sensordaten objektivieren sollen. Dabei ist es beispielsweise bekannt, bestimmte Betriebsparameter der Baumaschine zu überwachen und bei Unregelmäßigkeiten bzw. ungewöhnlichen Werten der gemessenen Betriebsparameter einen Fehlercode abzugeben, vgl. beispielsweise JP-OS-8-144 312. Solche Fehlercodes sind per se jedoch wenig aussagekräftig bzw. verlässlich, da beispielsweise ein kurzzeitiges Überschreiten einer zulässigen Drehzahl, wie es beispielsweise bei Bergabfahrten in einer Baustellenzufahrt auftreten kann, noch keine verlässliche Aussage über eine dadurch herbeigeführte Motorschädigung zulässt.

Die Schrift DE 101 45 571 A1 der Anmelderin Komatsu schlägt ferner ein Überwachungssystem für Baumaschinen vor, welches dem Grad einer Schädigung bzw. Abnormalität differenzierter vorhersagen will. Hierzu wird einerseits der Abgasdruck und die Abgastemperatur des Baumaschinendiesels sensorisch überwacht und andererseits mittels einer speziellen Analysevorrichtung das Schmieröl auf bestimmte Bestandteile wie Eisenpartikel hin analysiert. Zusätzlich zu diesen sensorischen Überwachungsgrößen hält die genannte Schrift es allerdings weiterhin für notwendig, in die automatisierte Beurteilung des Ist-Zustands der Baumaschine das Ergebnis einer Sichtprüfung einfließen zu lassen, die ein versierter Wartungsmitarbeiter durchführt. Dieses vorbekannte Überwachungssystem für Baumaschinen leidet einerseits an einer begrenzten Verlässlichkeit der Zustandsaussage. Durch die überwachten Abgasgrößen Abgastemperatur und Abgasdruck können vorrangig nur Probleme am Diesel ermittelt werden. Zum anderen ist das Überwachungssystem trotzdem relativ aufwändig, da Sichtprüfungen von Wartungsmitarbeitern durchgeführt werden müssen.

Ferner beschreibt die EP 3 273 414 A1 ein System zum Abschätzen der Restlebensdauer einer Baumaschine auf Basis von Bauteiltemperaturen und - belastungen. Weitere Überwachungssysteme sind aus den Schriften EP 15 64 688 A1, EP 17 24 730 A1, EP 25 30 209 A1, EP 32 36 326 A1, US 2011/0282626 A1, sowie US 2013/180319 A1, US 2008/140349 A1 und US 2016/266006 A1 bekannt.

Die US 2013/180319 A1 offenbart dabei den Oberbegriff des Anspruchs 1.

Der vorliegenden Erfindung liegt daher die Aufgabe zugrunde, eine verbesserte Vorrichtung zum Bestimmen des Ist-Zustands und/oder der Restlebensdauer einer Baumaschine zu schaffen, die Nachteile des Stand des Technik vermeidet und letzteren in vorteilhafter Weise weiterbildet. Insbesondere soll eine verlässliche, an mobilen Baumaschinen einfach zu realisierende Ist-Zustands- und/oder Restlebensdauerbestimmung erreicht werden, die ein rechtzeitiges Einleiten und Planen von Wartungs- bzw. Reparaturmaßnahmen auch durch nicht-geschulte Wartungsmitarbeiter mit einer ausreichenden Vorlaufzeit ermöglicht.

Erfindungsgemäß wird die genannte Aufgabe durch eine Vorrichtung durch Anspruch 1 gelöst. Bevorzugte Ausgestaltungen der Erfindung sind Gegenstand der abhängigen Ansprüche.

Es wird also gemäß einem Aspekt der vorliegenden Erfindung vorgeschlagen, die sensorische Überwachung der jeweiligen Baumaschine durch verschiedene Sensorgattungen breit genug auszubilden, um eine komplexe Abschätzung des Ist-Zustands bzw. der Restlebensdauer zu tragen. Die an der Baumaschine vorgesehenen Sensoren umfassen hierbei verschiedene Sensortypen zum Erfassen von zumindest zwei verschiedenen Informationsgattungen aus der Gruppe Bauteilschwingungen und Schmiermitteleigenschaften, und ggf. von weiteren Informationsgattungen umfassend Bauteil- und/oder Schmiermitteltemperaturen und Antriebsbelastung, wobei die Zentraleinheit der Vorrichtung dazu ausgebildet ist, den Ist-Zustand und die Restlebensdauer anhand der zumindest zwei verschiedenen Informationsgattungen zu bestimmen. Die genannten Informationsgattungen spiegeln dabei gezielt den für die Restlebensdauer relevanten Ist-Zustand wieder. Bauteilschwingungen sind charakteristisch für einen unrunden Lauf der Antriebe, der durch Bauteilverschleiß, Abnutzung oder unsachgemäßen Gebrauch impliziert sein kann und immer dann vom Soll-Schwingungsbild abweicht, wenn die Maschine Verschleiß zeigt. Die Schmiermitteleigenschaften sind ebenfalls ein aussagekräftiger Indikator sowohl für die Belastungshistorie als auch die verbleibende Restlebensdauer. Bauteil- bzw. Schmiermitteltemperaturen steigen durch übermäßige Belastungen und bei übermäßigem Verschleiß der damit geschmierten Bauteilkomponenten signifikant an und bilden daher ebenfalls einen verlässlichen Indikator für den Ist-Zustand und die verbleibende Restlebensdauer. Die genannten Antriebsbelastungen wie Drehzahl und Drehmomentsensor charakterisieren die auf die Maschine wirkenden Lastspiele und ermöglichen daher ebenfalls eine Vorhersage der Restlebensdauer.

Vorteilhafterweise können erfasste Informationen aller genannten Informationsgattungen für die Vorhersage der Restlebensdauer verwendet werden.

In Weiterbildung der Erfindung kann die genannte Sensorik Schwingungssensoren an verschiedenen Bauteilen und/oder Bauteilabschnitten umfassen, insbesondere an einem Antriebsgehäuse und/oder einem Getriebegehäuse und/oder einem anderen Element des Antriebsstrangs. Die genannten Schwingungssensoren können hierbei piezoelektrisch arbeitend ausgebildet sein und/oder elektro-mechanische Schwingungssensoren umfassen.

Zur Erfassung der genannten Schmiermitteleigenschaften können vorteilhafterweise verschiedene Sensoren vorgesehen sein, wobei in Weiterbildung der Erfindung zunächst ein Ölstandssensor vorgesehen sein kann, um den Schmiermittelstand in einem Schmiermittelsumpf einer Antriebskomponente, insbesondere einem Getriebe zu erfassen. Ein solcher Schmiermittelsensor kann einen Schwimmer umfassen und/oder taktil bzw. mechanisch den Füllstand ermitteln. Alternativ oder zusätzlich kann auch ein kapazitiver Schmiermittelfüllstandssensor vorgesehen sein.

Die Schmiermittelerfassung kann ferner vorteilhafterweise einen Feuchtigkeitssensor im Schmiermittelraum der Baumaschine umfassen, um Feuchtigkeit im Schmiermittel zu erfassen und/oder Feuchtigkeit im Schmiermittelraum zu erfassen.

Alternativ oder zusätzlich können die Schmiermittelsensoren auch einen Leitfähigkeitssensor umfassen, der im Schmiermittelraum und/oder im Schmiermittel angeordnet sein kann.

Ferner alternativ oder zusätzlich kann als Schmiermittelsensor auch ein Temperatursensor zum Erfassen der Schmiermitteltemperatur vorgesehen sein, wobei ein solcher Schmiermitteltemperatursensor im Schmiermittelsumpf angeordnet sein kann. Alternativ oder zusätzlich kann die Schmiermitteltemperatur auch indirekt erfasst werden, beispielsweise indem die Temperatur einer den Schmiermittelsumpf begrenzenden Gehäuseteilwandung erfasst wird.

Vorteilhafterweise erfasst die Sensorik nicht nur die Temperatur des Schmiermittels, sondern kann auch weitere Temperatursensoren umfassen, mittels derer die Temperatur weiterer thermisch belasteter Bauteile erfasst wird, beispielsweise die Temperatur von Lagern.

Die Erfassung der Antriebsbelastung kann vorteilhafterweise durch einen Drehzahlsensor und/oder einen Drehmomentsensor erfolgen, um eine Drehzahl einer Welle des Antriebsstrangs, insbesondere einer Getriebeeingangswelle und/oder anderer Getriebewellen zu erfassen, und/oder das an einer Welle des Antriebsstrangs anliegende Drehmoment zu bestimmen. Beispielsweise kann die Eingangswelle des Getriebes oder eine andere Getriebewelle durch einen Drehmomentsensor überwacht werden, um das an der Eingangswelle bzw. einer anderen Getriebewelle anliegende Drehmoment zu bestimmen. Ein solcher Drehmomentsensor kann verschieden ausgebildet sein, beispielsweise einen Dehnungsmessstreifen und/oder einen Abstandssensor zur Erfassung von Verformungen und/oder einen Sensor umfassen, der inverse magnetostriktive Effekte bestimmt.

In vorteilhafter Weiterbildung der Erfindung kann zumindest ein Sensor oder alle Sensoren in die zu überwachende Komponente der Baumaschine integriert sein, insbesondere in einem Innenraum aufgenommen sein. Alternativ oder zusätzlich kann aber auch die Anordnung eines oder mehrerer Sensoren an einer Außenseite der Bauteilkomponente und/oder in der näheren Umgebung der Baumaschinenkomponente und/oder der Baumaschine vorgesehen sein.

Die genannten Sensoren können vorteilhafterweise über ein Kabel mit der genannten Erfassungseinrichtung verbunden sein, welche die erfassten Zustandsinformationen sammelt. Alternativ oder zusätzlich können die Sensoren aber auch drahtlos mit der Erfassungseinrichtung kommunizieren, insbesondere die erfassten Informationen übertragen, beispielsweise über eine WLAN-, ZigBee-, Bluetooth-Verbindung oder eine andere Funkverbindung.

Vorteilhafterweise kann zumindest einer der genannten Sensoren von der genannten Erfassungseinrichtung her mit Strom bzw. Energie versorgt werden. Dies lässt sich insbesondere dann in einfacher Weise bewerkstelligen, wenn die Sensoren über Kabel mit der Erfassungseinheit verbunden sind.

Grundsätzlich können mit der genannten Sensorik verschiedene Baumaschinenkomponenten in entsprechender Weise überwacht und deren Ist-Zustand bzw. Restlebensdauer bestimmt werden. Um den Ist-Zustand bzw. die Ausfallwahrscheinlichkeit der gesamten Baumaschine verlässlich bestimmen zu können, ist es hilfreich, eine diesbezüglich aussagekräftige, relevante Baumaschinenkomponente zu überwachen. Gemäß einem weiteren Aspekt der vorliegenden Erfindung überwacht die genannte Sensorik ein Getriebe der Baumaschine, durch welches von einer Antriebseinrichtung her Antriebsleistung auf eine anzutreibende Baumaschinenkomponente übertragen wird. Dabei sind zumindest ein Schwingungssensor zum Erfassen von Bauteilschwingungen und zumindest einer der Sensoren: Ölpartikelsensor, Ölviskositätssensor, Ölleitfähigkeitssensor im Inneren des genannten Getriebes angeordnet. Insbesondere können zumindest ein weiterer oder auch alle Sensoren in das genannte Getriebe integriert, insbesondere in dessen Getriebe-Innenraum angeordnet sein, um die genannten Zustands-Informationen im Inneren des Getriebes zu erfassen.

Es ist also vorgesehen, dass Getriebeschwingungen und Getriebeschmiermitteleigenschaften und ggf. auch Getriebetemperaturen und Getriebebelastungen erfasst werden und von der Zentraleinheit der Ist-Zustand und die Restlebensdauer anhand zumindest der genannten Getriebeschwingungen und Getriebeschmiermittel-Eigenschaften bestimmt wird. Dabei können die genannten Eigenschaften an einem oder auch an mehreren Getrieben der Baumaschine überwacht und für die Bestimmung des Ist-Zustands und/oder der Restlebensdauer herangezogen werden. Ein Getriebe ist ein zentraler Bestandteil des Antriebsstrangs, an dem sich Auswirkungen von Verschleiß und Beschädigungen in charakteristischer Weise zeigen, sodass die Überwachung des Baumaschinengetriebes aussagekräftig für die Bestimmung des Ist-Zustands und/oder der Restlebensdauer ist.

Je nach Baumaschine kann ein solches Getriebe an verschiedenen Stellen eingesetzt sein. Beispielsweise kann es sich um ein Fahrantriebs-Getriebe handeln, über das ein Baumaschinen-Fahrantrieb wie beispielsweise eine Raupenkette oder ein Fahrwerksrad angetrieben wird. Alternativ oder zusätzlich kann ein Drehwerksgetriebe in der genannten Weise überwacht werden, mittels dessen ein Oberwagen der Baumaschine um eine aufrechte Achse gegenüber dem Unterwagen des Geräts bzw. gegenüber der Stützbasis verdreht werden kann. Beispielsweise kann dies der Oberwagen eines Hydraulikbaggers oder eines teleskopierbaren Mobilkrans oder eines Derrickkrans sein. Alternativ oder zusätzlich kann aber auch das Drehwerk eines Turmdrehkrans überwacht werden, mittels dessen bei einem Obendreher der Turm verdreht werden kann und bei einem Untendreher der Turm verdreht werden kann.

Alternativ oder zusätzlich können auch andere Getriebe einer Baumaschine wie beispielsweise das Hubwerksgetriebe eines Hubwerks in der genannten Weise überwacht werden.

Die genannte Erfassungseinheit, die mit den Sensoren verbunden ist und deren Informationen sammelt, kann vorteilhafterweise von der Baumaschine mit Strom bzw. Energie versorgt werden. Hierzu kann die genannte Erfassungseinheit einen an das Energienetz der Baumaschine angepassten Energieanschluss aufweisen.

Vorteilhafterweise kann die genannte Erfassungseinheit unmittelbar an der Baumaschine angeordnet sein, beispielsweise einen Teil der elektronischen Steuereinrichtung der Baumaschine bilden und/oder eine separate elektronische Baumaschinenkomponente bilden. Die genannte Erfassungseinheit kann beispielsweise einen Mikroprozessor und eine Speichereinrichtung aufweisen, um in dem Speicher abgelegte Programmbausteine abarbeiten zu können und/oder die gesammelten Daten in der Speichereinrichtung zwischenzuspeichern.

Vorteilhafterweise kann die genannte Erfassungseinheit eine Energie- bzw. Stromversorgungseinrichtung aufweisen, um den Sensoren Energie bzw. Strom bereitzustellen.

Unabhängig von einer solchen Energieversorgungseinrichtung kann die genannte Erfassungseinheit aber auch von der Baumaschine separat ausgebildet sein, insbesondere in der Baumaschinenumgebung, beispielsweise der Baustelle aufgestellt sein, wobei bei einer solchen separaten Ausbildung sowohl eine Kabelverbindung als auch eine kabellose Verbindung zu den Sensoren in Betracht kommt.

Vorteilhafterweise besitzt die genannte Erfassungseinheit zumindest eine digitale Kommunikationsschnittstelle, wobei eine solche digitale Schnittstelle beispielsweise eine CAN-Schnittstelle, eine Ethernet-Schnittstelle, eine Modbus-Schnittstelle, eine serielle Schnittstelle, eine Mobilfunkschnittstelle, eine WLAN-Schnittstelle und/oder eine Bluetooth-Schnittstelle umfassen kann. Über die genannte digitale Schnittstelle kann die Erfassungseinheit vorteilhafterweise an die eingangs genannte Zentral-einheit angebunden werden und/oder mit dieser kommunizieren. Gegebenenfalls kann die genannte digitale Schnittstelle auch zur Kommunikation mit einem oder mehreren Sensoren verwendet werden.

Vorteilhafterweise besitzt die genannte Erfassungseinheit eine eindeutige Kennung, die die Baumaschine identifiziert, an die die Erfassungseinheit angebunden ist. Eine solche Kennung kann ablesbar und/oder elektronisch abrufbar und/oder elektronisch auslesbar ausgebildet sein, wobei die Erfassungseinheit die genannte Kennung auch zusammen mit anderen Daten an die Zentraleinheit übertragen kann, insbesondere zusammen mit den gesammelten Zustands-Informationen.

Gemäß einem weiteren Aspekt der vorliegenden Erfindung ist die genannte Erfassungseinheit kein reiner Daten- bzw. Informationssammler, sondern dazu ausgebildet, die gesammelten, von den Sensoren bereitgestellten Informationen vorzubearbeiten und/oder zu klassifizieren. Insbesondere kann die Erfassungseinheit einen Baustein zum Datenvorverdichten und/oder zum Klassifizieren der gesammelten Daten aufweisen, um der Zentraleinheit vorverdichtete und/oder klassifizierte Zustands-Informationen übermitteln zu können.

Insbesondere kann die Erfassungseinheit dazu ausgebildet sein, aus den gesammelten Schwingungs-Informationen Schwingungsspektren und/oder charakteristische Schwingungskennwerte abzuleiten und/oder frequenzselektive Kennwerte zu bilden.

Alternativ oder zusätzlich kann die Erfassungseinheit eine Einrichtung aufweisen, die die erfassten Drehmoment-Informationen und/oder Drehzahl-Informationen klassifiziert, insbesondere stufenweise klassifiziert, beispielsweise hinsichtlich einer Last-Zeit-Verteilung.

Alternativ oder zusätzlich kann die Erfassungseinheit eine Verknüpfungs- und/oder Verrechnungseinheit aufweisen, um Sensordaten miteinander zu verrechnen. Beispielsweise können gesammelte Temperaturwerte miteinander abgeglichen und/oder Temperaturdifferenzen bestimmt werden. Alternativ oder zusätzlich können Leistungen aus Drehzahl und Drehmoment berechnet werden, um die solchermaßen abgeglichenen und/oder berechneten, aus den gesammelten Sensordaten gewonnenen Informationen an die Zentraleinheit weiterreichen zu können.

Alternativ oder zusätzlich kann die Erfassungseinheit dazu ausgebildet sein, aus den gesammelten Sensordaten weitere Kennwerte abzuleiten und zu ermitteln, beispielsweise ein Abtriebsdrehmoment aus dem Eingangsdrehmoment berechnen, und zwar mittels einer Übersetzung des Getriebes unter Einbeziehung eines Wirkungsgradkennfelds.

**In** vorteilhafter Weiterbildung der Erfindung kann die Erfassungseinheit Zugriff auf einen Konfigurationsspeicher haben und/oder einen Konfigurationsspeicher beinhalten, in welchem zentrale Daten zur Baumaschinenkomponente gespeichert sind, beispielsweise Betriebsstunden, Seriennummer, Stufenanzahl, Wirkungsgradkennfeld, Wärmeübergangskoeffizienten, Grenzwerte und ähnliches.

**In** vorteilhafter Weiterbildung der Erfindung hat die genannte Erfassungseinheit eine Eigendiagnose-Einrichtung, welche den eigenen Betriebsstatus der Erfassungseinheit bestimmt, beispielsweise den Ein-/Ausschaltzustand des Geräts und/oder einen aktiven oder inaktiven oder defekten Zustand eines angeschlossenen Sensors.

Die zuvor genannte Zentraleinheit kann beispielsweise auf der Baustelle aufgestellt sein, auf welcher die Baumaschine betrieben wird. Beispielsweise kann sie mit einem Baustellenleitrechner zusammengefasst sein oder von diesem gebildet sein. In alternativer Weiterbildung der Erfindung kann die genannte Zentral-Einheit aber auch örtlich von der Baustelle getrennt aufgestellt sein, beispielsweise bei einem Baumaschinenhersteller oder Baumaschinenbetreiber. Die genannte Zentraleinheit kann aber auch in einer Cloud realisiert sein, wobei beispielsweise auch ein Maschinenanbieter einen Unterbereich einer kommerziellen Cloud bereithalten oder eine eigene Cloudlösung verwenden kann. Andererseits kann die Zentral-Einheit in vorteilhafter Weiterbildung der Erfindung aber auch auf der Baumaschine selbst installiert sein.

Um mit der genannten Erfassungseinheit oder auch mehreren Erfassungseinheiten, die einer oder verschiedenen Baumaschinen zugeordnet sein können, und der Anzeigevorrichtung kommunizieren zu können, kann die genannte Zentraleinheit eine oder mehrere Kommunikationsschnittstellen, vorzugsweise eine oder mehrere digitale Schnittstellen umfassen, beispielsweise in Form einer CAN-Schnittstelle, Ethernet-Schnittstelle, Modbus-Schnittstelle, serielle Schnittstelle, Mobilfunkschnittstelle, WLAN-Schnittstelle oder Bluetooth-Schnittstelle.

Vorteilhafterweise kann die Zentraleinheit auch eine Schnittstelle, die in der vorgenannten Weise ausgebildet sein kann, zur Programmierung und/oder Wartung und/oder zum Auslesen der bestimmten Identifikations- und/oder Status- und/oder Restlebensdauer-Daten umfassen.

Die genannte Zentraleinheit umfasst in Weiterbildung der Erfindung einen Analyse-baustein zum Analysieren der von der Erfassungseinheit gesammelten Zustands-Informationen und/oder zum Analysieren der von der Erfassungseinheit übermittelten, vorab bearbeiteten Zustands-Informationen, die beispielsweise die zuvor erläuterten vorkomprimierten und/oder klassifizierten Informationen umfassen können. Insbesondere kann der genannte Analysebaustein der Zentraleinheit auch dazu ausgebildet sein, die von der Erfassungseinheit vorverarbeiteten Zustands-Informationen beispielsweise in Form von Schwingungsspektren und/oder charakteristischen Schwingungskennwerten und/oder frequenzselektiven Kennwerten zu analysieren. Alternativ oder zusätzlich kann der Analysebaustein auch die von der Erfassungseinheit abgeleiteten Informationen weiterverarbeiten, beispielsweise die von der Erfassungseinheit bestimmten Temperaturdifferenzen, aus Drehzahl und Drehmoment bestimmten Leistungswerten und/oder die von der Erfassungseinheit ermittelten Abtriebs- und/oder Eingangsdrehmomente.

In vorteilhafter Weiterbildung der Erfindung kann der Analyseprozess also zweistufig ausgebildet sein, wobei eine Vorverarbeitung und/oder -analyse in der Erfassungseinheit erfolgt und ein zweiter Analyseschritt dann in der Zentraleinheit vorgenommen wird.

In Weiterbildung der Erfindung kann der Analysebaustein der Zentraleinheit dabei sowohl vorverarbeitete Zustands-Informationen, die von der Erfassungseinheit in der genannten Weise vorverarbeitet wurden, als auch gesammelte Sensordaten, die von der Erfassungseinheit nicht weiter bearbeitet wurden, miteinander verknüpfen und/oder auf Basis beider Datentypen den Ist-Zustand und/oder die Restlebensdauer der Baumaschine und/oder einer der Baumaschinenkomponenten bestimmen.

Um rechtzeitig einen Wartungsbedarf mit ausreichend Vorlauf für die Reparaturplanung bestimmen zu können, umfasst die Zentraleinheit vorteilhafterweise einen Trendermittlungsbaustein, der anhand der genannten Zustands-Informationen, die zumindest die genannte, erfassten Bauteilschwingungen und die genannten, erfassten Getriebeölinformationen umfassen, und ggf. zusätzlich anhand daraus abgeleiteter Informationen einen Trend bestimmt, den die Veränderung der genannten Zustands-Informationen und der ggf. daraus abgeleiteten Informationen folgt, um aus diesem Trend eine zu erwartende Veränderung des Ist-Zustands und die Restlebensdauer präziser abschätzen zu können.

Zusätzlich zu einem solchen Trend-Ermittlungsbaustein umfasst die Zentraleinheit vorteilhafterweise eine Vergleichseinrichtung, die die übermittelten Zustands-Informationen und/oder die daraus abgeleiteten Informationen mit Grenzwerten und/oder vorbestimmten Bereichen vergleicht und aus dem Abstand der Ist-Werte der genannten Daten von den Grenzwerten und/oder den Bereichsgrenzen und/oder einem Überschreiten der genannten Grenzwerte den Ist-Zustand und/oder die Restlebensdauer der genannten Baumaschine bzw. des genannten Baumaschinenteils ermittelt.

Gemäß der Erfindung umfasst die Zentraleinheit eine Gewichtungseinrichtung, die den einzelnen Zustands-Informationen und/oder den daraus abgeleiteten Informationen und/oder dem jeweiligen Abstand einer solchen Information vom zugehörigen Grenzwert und/oder der zugehörigen Bereichsgrenze ein individuelles Gewicht bzw. eine individuelle Gewichtung zuspricht, sodass beispielsweise ein Vibrationskennwert in Bezug auf die Bestimmung der Restlebensdauer stärker berücksichtigt wird als ein Temperaturwert des Ölsumpf-Gehäuses.

Die genannte Gewichtungseinrichtung kann auch den von der Trend-Bestimmungseinrichtung bestimmten Trend der Veränderungen von Zustands-Informationen eine unterschiedliche Gewichtung geben, wobei eine solche Gewichtung insbesondere anhand der Stärke des Trends vergeben bzw. bestimmt werden kann. Zeigt beispielsweise der Trend des Schwingungskennwerts eine sehr starke Veränderung und der Trend eines Temperaturwerts eine nur geringe Veränderung, kann der Trend des Vibrations-Kennwerts stärker gewichtet werden, um eine stärkere Verkürzung der Restlebensdauer zu bestimmen. Ein solcher starker, aussagekräftiger Trend kann als Zeichen dafür gewertet werden, dass das mit der jeweiligen Zustands-Information verknüpfte Bauteil stärkeren Verschleiß erfährt und demnächst ausfällt.

Gemäß der Erfindung umfasst die Zentraleinheit auch eine dynamische Beurteilungseinrichtung, mittels derer die Annäherung einer oder mehrerer Zustands-Informationen an einen Grenzwert und gegebenenfalls ein oder mehrere Trends bei der Bestimmung des Ist-Zustands und der Restlebensdauer nicht immer gleich, sondern dynamisch berücksichtigt werden. Überschreitet beispielsweise eine erfasste Zustands-Information einen vorbestimmten Schwellwert nur leicht um beispielsweise 5%, liegen alle anderen Zustands-Informationen aber noch auf der guten Seite der jeweiligen Schwellwerte, kann die genannte 5%-ige Überschreitung des einen Schwellwerts noch als unproblematisch gewertet werden. Liegen indes drei erfasste Zustands-Informationen um beispielsweise 4%, 3% und 1,5% jenseits des jeweils zugehörigen Schwellwerts, kann dies ein Wartungssignal auslösen, auch wenn für eine individuelle Überschreitung die genannte Überschreitungstoleranz von 5% nicht einschlägig wäre.

Die Bestimmung der Restlebensdauer bzw. eine Lebensdauerprognose kann von der genannten Zentraleinheit auf Basis von Berechnungsmodellen berechnet werden, wobei vorteilhafterweise sowohl die aktuell gesammelten Zustands-Informationen als auch eine Betriebshistorie der Baumaschine und/oder der Baumaschinenkomponente berücksichtigt werden kann, insbesondere auch in parametrierter Form.

Insbesondere kann beispielsweise das genannte Berechnungsmodell mit Daten aus der Betriebshistorie gefüttert werden, um die Stärke von Abweichungen, die eine Zustands-Information oder mehrere Zustands-Informationen in der Betriebshistorie gezeigt haben, zu ermitteln. Hierdurch können zulässige Schwellwerte skaliert werden. Zeigt beispielsweise die Betriebshistorie, dass ein gesammelter Schwingungskennwert in dem Zeitraum, zu dem Daten gesammelt wurden, um 40% nach oben und/oder unten von einem Mittelwert abgewichen ist, kann beispielsweise eine Abweichung von 50% oder 60% als kritisch angesehen werden. Wird dann ein aktuell gesammelter Datensatz der entsprechenden Zustands-Information in das Berechnungsmodell gegeben, kann ein kritischer Zustand angenommen werden, wenn die skalierte Abweichung überschritten wird.

In Weiterbildung der Erfindung kann die Zentraleinheit für eine mechanische Baumaschinenkomponente eine Schädigung nach vorbestimmten Bestimmungsregeln ermitteln, insbesondere berechnen, wobei Festigkeitswerte verwendeter Werkstoffe und/oder Standardwerte nach Literatur zugrundegelegt werden können.

Für einen überwachten Schmierstoff kann die Zentraleinheit ein thermisches Schädigungsmodell zugrundelegen, auf Basis dessen eine gesammelte Temperaturhistorie des Schmierstoffs in eine thermische Schädigung des Schmierstoffs umgerechnet werden kann. Erfolgt ein Ölwechsel, kann die Temperaturhistorie bzw. die erreichte Schädigung des Schmierstoffs rückgesetzt werden.

Die genannte Zentraleinheit kann eine elektronische Rechenvorrichtung bzw. elektronische Datenverarbeitungsvorrichtung sein, die beispielsweise einen oder mehrere Prozessoren, einen Programmspeicher und/oder einen Datenspeicher aufweisen kann, um vorbestimmte Programmbausteine abarbeiten zu können. Beispielsweise kann die genannte Zentraleinheit in Form eines Servers ausgebildet sein.

In Weiterbildung der Erfindung ist eine Speichereinheit vorgesehen, die mit der genannten Zentraleinheit permanent oder befristet kabelgebunden oder kabellos verbunden sein kann, beispielsweise über eine entsprechende Kommunikationsschnittstelle, die der Zentraleinheit Zugriff auf die Speichereinheit gewährt, beispielsweise in Form einer CAN-Schnittstelle, Ethernet-Schnittstelle, Modbus-Schnittstelle, serielle Schnittstelle, Mobilfunkschnittstelle, WLAN-Schnittstelle oder Bluetooth-Schnittstelle.

Die genannte Speichereinheit kann von der Zentraleinheit örtlich getrennt angeordnet, oder auch direkt in die Zentraleinheit integriert sein.

Vorteilhafterweise ist die genannte Speichereinheit dazu konfiguriert, sowohl aktuell gesammelte Daten als auch die Historie der Daten oder anderer Daten zu speichern. Die Speichereinheit kann für Ist-Daten und für die Datenhistorie separate Speicherbereiche umfassen.

Dabei können als Ist-Daten und/oder als Historie der Daten sowohl Sensor-Rohdaten, die von der Erfassungseinheit und der Zentraleinheit unbearbeitet geblieben sind, gespeichert werden als auch bearbeitete Daten, die von der Erfassungseinheit und/oder der Zentraleinheit berechnet bzw. in anderer Weise bestimmt wurden. Insbesondere können auch die genannten Trend-Daten und/oder Restlebensdauer-Daten und/oder Ist-Zustands-Daten in der Zentraleinheit gespeichert sein.

Die genannte Speichereinheit kann auf einem lokal installierten Rechner, beispielsweise einem Server, der die Zentraleinheit beinhaltet, implementiert sein. Alternativ oder zusätzlich kann die genannte Speichereinheit aber auch in einer Cloud implementiert sein.

Die genannte Anzeigevorrichtung zum Anzeigen des ermittelten Ist-Zustands und/oder der ermittelten Restlebensdauer kann grundsätzlich verschieden beschaffen sein.

Vorteilhafterweise besitzt die genannte Anzeigevorrichtung eine Kommunikationsschnittstelle zum Kommunizieren mit der genannten Zentraleinheit und/oder mit der genannten Speichereinheit, um von der Zentraleinheit ermittelte Daten, insbesondere die ermittelte Restlebensdauer und/oder den ermittelten Ist-Zustand anzuzeigen, und/oder in der Speichereinheit gespeicherte Daten, insbesondere einen dort gespeicherten Ist-Zustand und/oder gespeicherte Restlebensdauer anzuzeigen.

Die genannte Schnittstelle der Anzeigevorrichtung kann ähnlich wie zuvor erläutert eine digitale Schnittstelle umfassen, beispielsweise eine CAN-Schnittstelle, Ethernet-Schnittstelle, Modbus-Schnittstelle, serielle Schnittstelle, Mobilfunkschnittstelle, WLAN-Schnittstelle oder Bluetooth-Schnittstelle.

Die genannte Anzeigevorrichtung kann vorteilhafterweise auf der Baumaschine vorgesehen sein, um einen Maschinenführer auf der Baumaschine die entsprechenden Daten, insbesondere den ermittelten Ist-Zustand und/oder die ermittelte Restlebensdauer anzuzeigen. Alternativ oder zusätzlich kann die genannte Anzeigevorrichtung in einer Leitstelle beim Maschinenbetreiber und/oder beim Maschinenhersteller vorgesehen sein, um dem Maschinenbetreiber und/oder dem Maschinenhersteller die entsprechenden Daten anzuzeigen.

Insbesondere kann die genannte Anzeigevorrichtung zumindest ein Display umfassen, auf dem die genannten Daten, insbesondere der ermittelte Ist-Zustand und/oder die ermittelte Restlebensdauer und/oder die Zustandshistorie und/oder Trend-Daten und/oder Prognose-Daten, angezeigt werden können.

Ein solches Display ist vorteilhafterweise an der Baumaschine, insbesondere im Maschinenführerstand vorgesehen. Alternativ oder zusätzlich kann ein Display auch in der zentralen Leitstelle beim Maschinenbetreiber und/oder beim Maschinenhersteller vorgesehen sein.

Die genannte Anzeigevorrichtung kann in vorteilhafter Weiterbildung der Erfindung dazu konfiguriert sein, Warnmeldungen zu generieren, sobald die Baumaschine und/oder zumindest eine Baumaschinenkomponente außerhalb ihrer Betriebsspezifikation betrieben wird und/oder Grenzwerte über und/oder unterschritten werden, und/oder eine Lebensdauerprognose eine bestimmte Restzeit unterschreitet.

Vorteilhafterweise kann die Anzeigevorrichtung eine Benutzerverwaltung besitzen, die es erlaubt, die Art und Weise der Datenanzeige zu konfigurieren und/oder Zugriffsrechte auf bestimmte Daten zu definieren.

Vorteilhafterweise kann die Anzeigevorrichtung auch dazu konfiguriert sein, eine Übersicht und Einzeldaten aus mehreren Zentraleinheiten und/oder mehreren Speichereinheiten anzuzeigen, um ein Flottenmanagement zu ermöglichen.

Die Erfindung wird nachfolgend anhand eines bevorzugten Ausführungsbeispiels und zugehöriger Zeichnungen näher erläutert. In den Zeichnungen zeigen:
- Fig. 1:: eine schematische Darstellung einer Baumaschine in Form eines Raupenbaggers mit einem Drehwerks-Getriebe und einem Fahrantriebs-Getriebe, deren Ist-Zustand und Restlebensdauer von einer Vorrichtung nach einer vorteilhaften Ausführung der Erfindung durch sensorische Überwachung der beiden Getriebe bestimmt wird,
- Fig. 2:: eine schematische Darstellung der in das Fahrantriebs-Getriebe integrierten Sensoren zum Erfassen bestimmter Zustands-Informationen,
- Fig. 3:: eine schematische Darstellung des Gesamtaufbaus der Vorrichtung zum Bestimmen des Ist-Zustands und der Restlebensdauer der Baumaschine aus Figur 1 und deren Drehwerks- und Fahrantriebs-Getrieben, wobei die Anbindung der Getriebesensoren an eine Erfassungseinheit, die daran angebundene Zentraleinheit zum Auswerten der Daten und die damit wiederum verbundenen Speichereinheiten und Visualisierungseinheiten dargestellt sind,
- Fig. 4:: ein schematisches Datenflussdiagramm, das den Datenfluss und die Verarbeitung der erfassten Zustands-Informationen von deren sensorischer Erfassung am Baumaschinengetriebe bis zur Anzeige des Ist-Zustands und der Restlebensdauer auf einem Display verdeutlicht,
- Fig. 5:: eine schematische Darstellung der Verarbeitungsschritte betreffend die sensorisch am Getriebe erfassten Zustandsdaten bis zur Anzeige der ermittelten Restlebensdauer, wobei einerseits eine dezentrale Datenverarbeitung und andererseits eine zentrale Verarbeitung dargestellt sind,
- Fig. 6:: eine schematische Darstellung der Anzeige des ermittelten Ist-Zustands, der ermittelten Restlebensdauer und der ermittelten Zeitspanne verblei- bend bis zu einem benötigten Service auf der Anzeigevorrichtung der Baumaschine, und

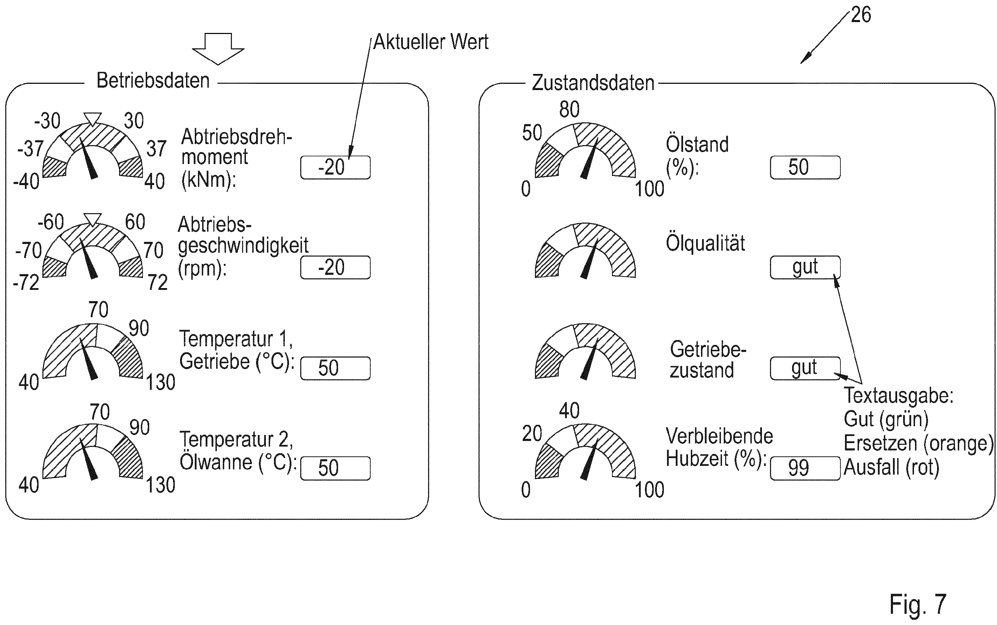

- Fig. 7:: eine schematische Darstellung der Anzeige aktuell erfasster Zustands-Informationen und des ermittelten Ist-Zustands und der ermittelten Restlebensdauer von Öl und Getriebe der Baumaschine aus den vorhergehenden Figuren.

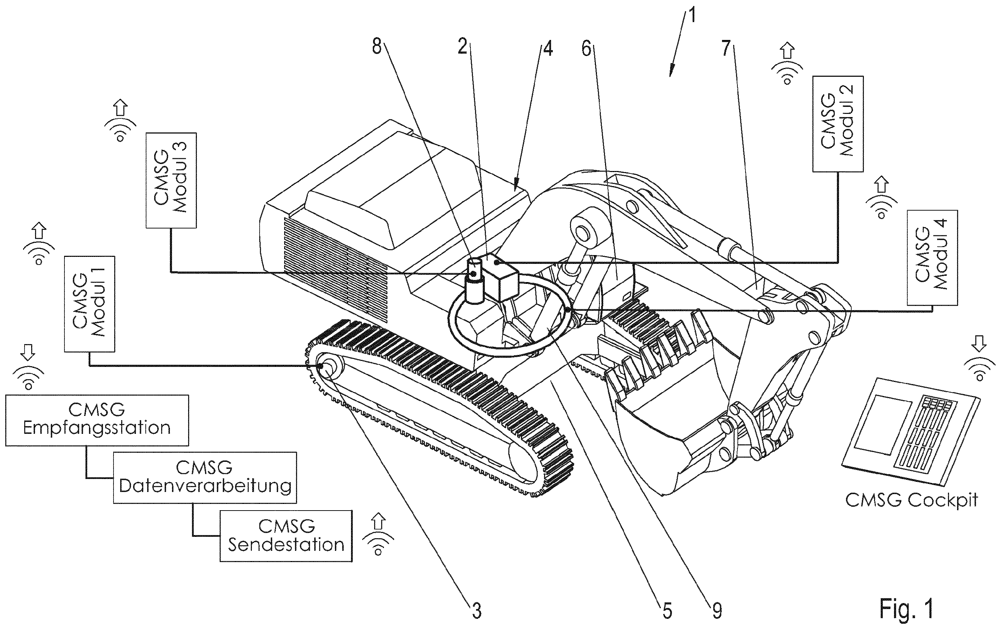

Wie Figur 1 zeigt, kann beispielsweise eine Baumaschine 1 in Form eines Raupenbaggers überwacht werden, wobei insbesondere ein oder mehrere Getriebe sensorisch überwacht werden können. Beispielsweise kann ein Fahrantriebs-Getriebe 3 und ein Drehwerks-Getriebe 2 überwacht werden. Wie Figur 1 verdeutlicht, kann das Fahrantriebs-Getriebe 3 beispielsweise den Turas eines Kettenfahrwerks antreiben und das Drehwerks-Getriebe 2 die Drehbühne 4 rotatorisch verstellen, welche Drehbühne 4 um eine aufrechte Achse drehbar auf dem Unterwagen 5 gelagert ist, der den Fahrantrieb aufweist. An der Drehbühne 4 können in an sich bekannter Weise ein Führerstand 6, ein Knickarm-Ausleger 7 und weitere Antriebe und Gegengewichte und andere Baumaschinenkomponenten untergebracht sein.

Wie Figur 1 zeigt, können alternativ oder zusätzlich zu den genannten Getrieben 2 und 3 auch andere, Lebensdauer relevante Komponenten der Baumaschine 1 sensorisch überwacht werden, beispielsweise der Antriebsmotor 8 des Drehwerks und/oder ein Wippaktor 9 zum Auf- und Niederwippen des Auslegers 7 beispielsweise in Form eines Druckmittelzylinders.

Wie Figur 1 weiterhin zeigt, können die gesammelten Sensordaten drahtlos per Sendemodul an eine Zentraleinheit übermittelt werden, wie noch erläutert wird.

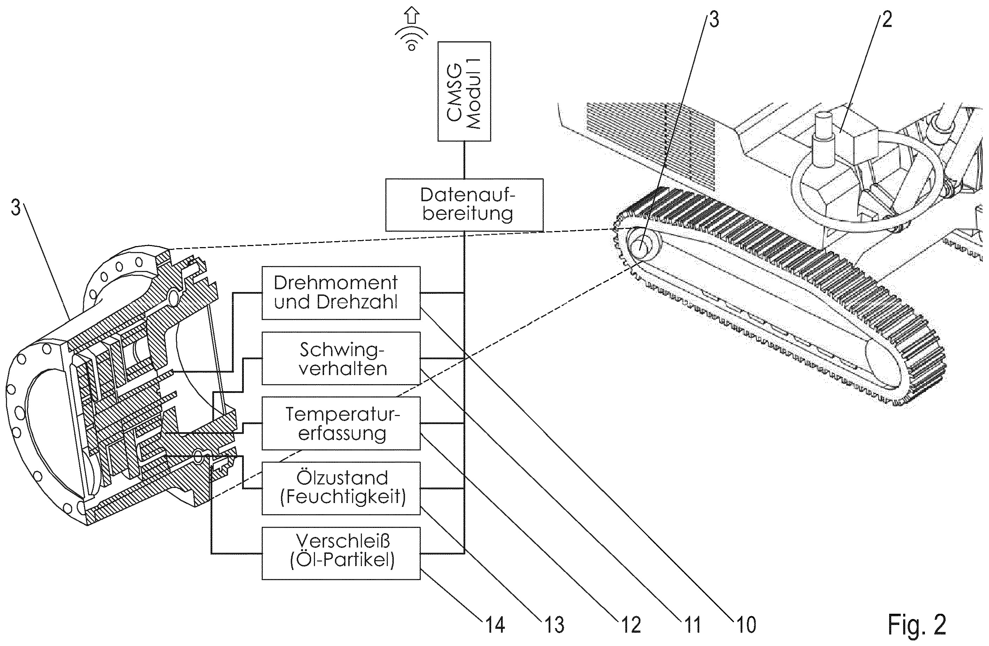

Wie Figur 2 zeigt, können in die zu überwachende Baumaschinenkomponente, insbesondere eines der Getriebe 3 verschiedene Sensoren integriert sein, insbesondere in einem von einem Komponentengehäuse umschlossenen Innenraum angeordnet sein, um relevante Zustands-Informationen zu erfassen.

Insbesondere können dem Getriebe 3 ein Drehmomentsensor 10, ein Drehzahlsensor 11, ein Temperatursensor 12 zum Erfassen der Getriebeöl-Temperatur und/oder der Temperatur einer anderen Getriebe-Komponente, ein Ölzustandssensor 13 insbesondere zum Erfassen von Feuchtigkeit im Öl bzw. Ölraum und ein Ölpartikelsensor 14 zum Erfassen von Partikeln wie Metallspinnen im Öl zugeordnet sein.

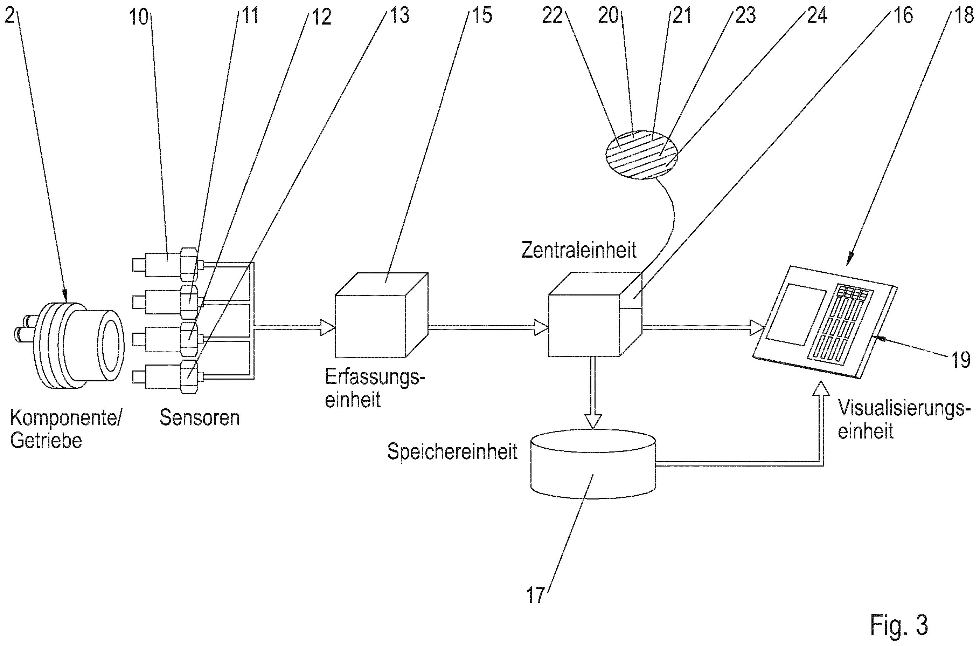

Wie Figur 3 zeigt, werden die von den diversen Sensoren 10 bis 14 erfassten Zustands-Informationen an eine Erfassungseinheit 15 übermittelt, was drahtlos oder drahtgebunden erfolgen kann, wie eingangs erläutert. Vorteilhafterweise können die Sensoren 10 bis 14 von der genannten Erfassungseinheit 15 mit Strom versorgt werden. Wobei die genannte Erfassungseinheit 15 selbst von der Baumaschine 1 mit Strom versorgt werden kann.

Wie Figur 3 zeigt, übermittelt die Erfassungseinheit 15 die gesammelten Sensordaten bzw. die sensorisch erfassten Zustands-Informationen und/oder daraus abgeleitete Daten, Kenngrößen, Kennwerte und Ähnliches wie eingangs erläutert an die Zentraleinheit 16, die auf Basis der übermittelten Zustands-Informationen und/oder anderer von der Erfassungseinheit 15 übermittelter Größen die Restlebensdauer und den Ist-Zustand der Baumaschine 1, insbesondere der überwachten Getriebe 2 und 3 ermittelt.

Die an die Zentraleinheit angebundene Speichereinheit 17 speichert vorteilhafterweise sowohl die von der Erfassungseinheit 15 an die Zentraleinheit 16 übermittelten Zustands-Informationen und/oder gegebenenfalls vorverarbeitete Daten wie Kenngrößen etc., als auch die von der Zentraleinheit 16 bestimmte Restlebensdauer und den bestimmten Ist-Zustand. Vorteilhafterweise speichert die genannte Speichereinheit 17 auch eine entsprechende Daten-Historie.

Wie Figur 3 zeigt, ist eine Anzeigevorrichtung 18 umfassend eine Visualisierungseinheit 19 sowohl an die genannte Speichereinheit 17 als auch die Zentraleinheit 16 angebunden, um die von der Zentraleinheit 16 ermittelten Informationen und in der Speichereinheit 17 gespeicherten Informationen anzuzeigen bzw. zu visualisieren.

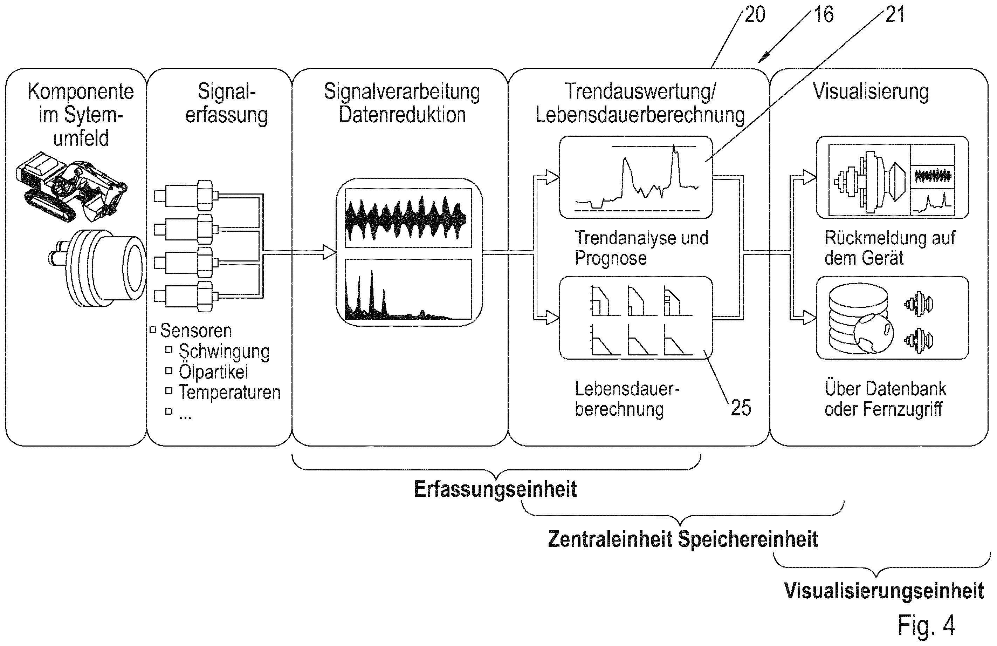

Vorteilhafterweise kann die Bearbeitung und Auswertung der sensorisch erfassten Zustands-Informationen zweistufig erfolgen. Einerseits kann, wie Figur 4 zeigt, eine Vorverarbeitung und/oder Reduktion der sensorisch erfassten Zustands-Informationen durch die Erfassungseinheit 15 erfolgen, um die Informationen komprimiert und/oder reduziert und/oder vorverarbeitet an die Zentraleinheit 16 zu übermitteln. Gegebenenfalls kann die genannte Erfassungseinheit 15 auch bereits weitere Analyse- und/oder Auswerteschritte ausführen, wie eingangs erläutert.

Die genannte Erfassungseinheit 15 kann insofern eine Datenverarbeitungseinrichtung bilden, die einen oder mehrere Prozessoren und einen oder mehrere Speicher umfassen kann, in dem bzw. denen Programmbausteine abgespeichert sind, die von den Prozessoren abgearbeitet werden.

Die Zentraleinheit 16, die als Server ausgebildet sein kann und/oder einen oder mehrere Prozessoren und einen oder mehrere Speichereinrichtungen umfassen kann, um in entsprechender Weise Programmbausteine abzuarbeiten, kann die von der Erfassungseinheit 15 übermittelten, gesammelten Zustands-Informationen und/oder vorbearbeitete, komprimierte und/oder reduzierte Daten, die von der Erfassungseinheit 15 übermittelt werden, weiter analysieren und auswerten, um den Ist-Zustand und die Restlebensdauer der Baumaschine 1 bzw. deren Getriebe 2 und 3 zu ermitteln.

Die Zentraleinheit 16 weist hierzu einen Analyse-Baustein 20 auf, der die von der Erfassungseinheit 15 übermittelten Informationen analysiert, gegebenenfalls zusammen mit weiteren Informationen, die der Zentraleinheit 16 und deren Analyse-baustein 20 aus der Speichereinheit 17 übermittelt werden.

Insbesondere kann die Zentraleinheit 16 einen Trend-Ermittlungsbaustein 21 aufweisen, um aus den genannten Informationen einen Trend zu ermitteln, wie dies eingangs erläutert wurde, vgl. Figur 4.

Ferner weist die Zentraleinheit 16 einen Trend-Ermittlungsbaustein 21 auf, um aus den genannten Informationen einen Trend zu ermitteln, wie dies eingangs erläutert wurde, vgl. Figur 4.

Zusätzlich zur genannten Trendbestimmung kann eine Vergleichseinrichtung 22, die in der Zentraleinheit 16 implementiert ist, die übermittelten Daten bzw. Informationen mit Schwellwerten und/oder Bereichsgrenzen abgleichen, wie schon erläutert. Eine Gewichtungseinrichtung 23 ist dazu vorgesehen, unterschiedliche Zustands-Informationen und/oder unterschiedliche Trends und/oder unterschiedliche Schwellwertabweichungen unterschiedlich zu gewichten und verschiedene Relevanz beizumessen, welche für die Bestimmung des Ist-Zustands und der Restlaufzeit berücksichtigt werden.

Die dynamische Bestimmungseinrichtung 24 kann Berechnungsfaktoren und/oder Schwellwerte und/oder Gewichtungen dynamisch verändern, wie eingangs schon erläutert.

Die Restlebensdauer-Berechnungseinheit 25 der Zentraleinheit 16 berechnet dann anhand der Informationen und der daraus abgeleiteten Daten, Trends und Gewichtungen auf Basis von Berechnungsmodellen die verbleibende Restlebensdauer der überwachten Komponente.

Wie Figur 4 ferner zeigt, werden die ermittelten Größen Ist-Zustand und Restlebensdauer sowie weitere, interessierende Informationen wie aktuelle Zustands-Informationen oder abgeleitete Zwischenauswertungen von der Anzeigevorrichtung 18 auf einem Display 26 angezeigt, das am Führerstand 6 vorgesehen sein kann, wobei aber auch weitere Displays 26 beim Maschinenhersteller oder Maschinenbetreiber vorgesehen sein können.

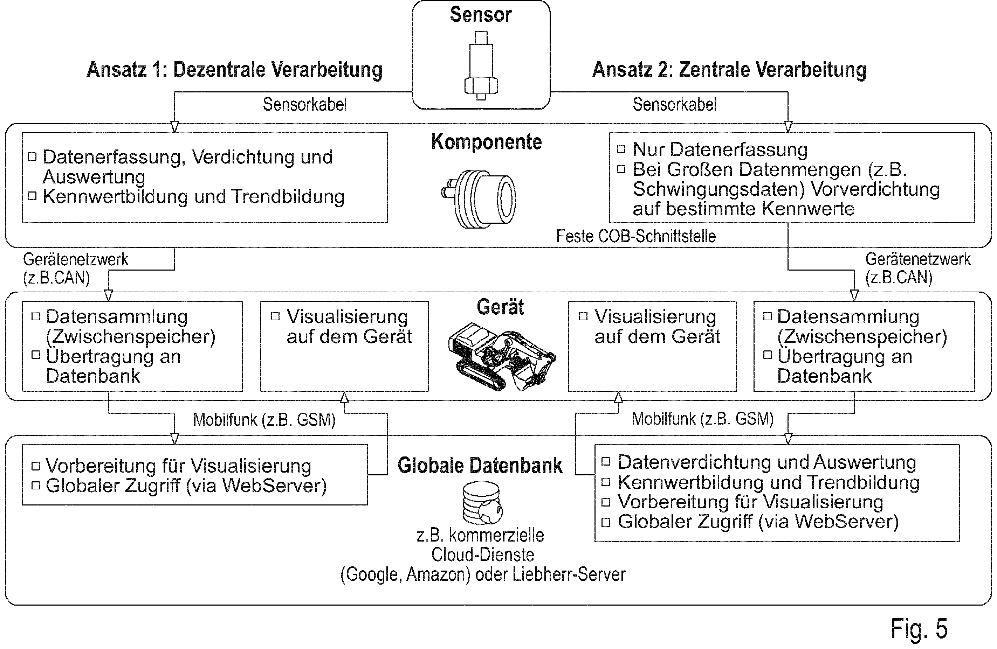

Wie Figur 5 zeigt, können die an der Baumaschine 1 sensorisch erfassten Zustands-Informationen dezentral verarbeitet werden oder zentral verarbeitet werden.

Während bei einer zentralen Verarbeitung an der sensorisch überwachten Komponente wie beispielsweise dem Getriebe 3 lediglich eine Datenerfassung und gegebenenfalls bei großen Datenmengen eine Vorverdichtung erfolgt und an der Baumaschine 1 lediglich eine Datensammlung insbesondere in der Erfassungseinheit 15 erfolgt, kann bei der dezentralen Verarbeitung zusätzlich an der Komponente beispielsweise in Form des Getriebes 3 und/oder an der Baumaschine 1 zusätzlich eine Vorauswertung und/oder Auswertung der Sensordaten, beispielsweise eine Kennwertbildung und Trendbildung erfolgen, insbesondere durch die an der Baumaschine vorgesehene Erfassungseinheit 15 und/oder die an der Baumaschine oder vor Ort an der Baustelle vorgesehene Zentraleinheit 16.

Bei der zentralen Verarbeitung erfolgt sodann erst zentral, beispielsweise durch einen zentralen Server, in dem die Zentraleinheit 16 implementiert ist, die Datenverdichtung und Auswertung, Kennwertbildung und Trendbildung, Vorbereitung für die Visualisierung und die Bereitstellung eines globalen Zugriffs beispielsweise via Webservices. Im Gegensatz hierzu wird bei der dezentralen Verarbeitung, da die Verarbeitung schon dezentral erfolgt ist, zentral lediglich noch die Vorbereitung für die Visualisierung ausgeführt und ein globaler Zugriff bereitgestellt.

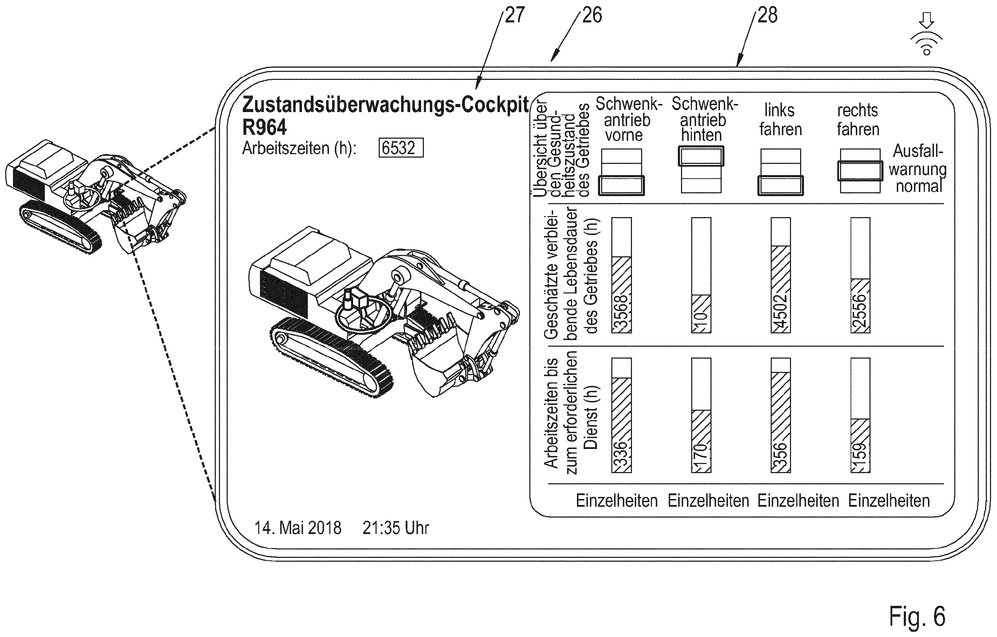

Wie Figur 6 zeigt, kann das die erfassten und/oder ermittelten Informationen darstellende Display 26 vorteilhafterweise eine geteilte Bildschirmanzeige ähnlich einem Split-Screen umfassen, sodass in einem Anzeigefeld 27 die Baumaschine 1 und die Komponenten, insbesondere Getriebe 2 und 3 dargestellt sind, auf die sich die Darstellung der erfassten und/oder ermittelten Informationen bezieht. Im weiteren Anzeigefeld 28 werden die ermittelten Informationen, insbesondere der ermittelte Ist-Zustand, die ermittelte Restlebensdauer und das verbleibende Intervall zum nächsten benötigten Service dargestellt, vorteilhafterweise jeweils in Form eines Stufen- oder Balkendiagramms und/oder eines Füllstreifendiagramms. Alternativ oder zusätzlich werden die ermittelten Informationen in dem Anzeigefeld 28 in einer Ampel-Darstellung dargestellt, beispielsweise mittels der intuitiv erfassbaren Ampelfarben-Symbolik "Grün = in Ordnung", "Gelb = bedingt in Ordnung/Tendenz zu kritisch" und "Rot = kritisch/Problem".

## Patentansprüche

1. Vorrichtung zum Ermitteln des Ist-Zustands und der Restlebensdauer eines Getriebes (2, 3) einer Bau-, Materialumschlags- und/oder Fördermaschine (1), mit mehreren an der Bau-, Materialumschlags- und/oder Fördermaschine (1) vorgesehenen Sensoren (10 bis 14) zum Erfassen verschiedener Zustands-Informationen, einer mit den Sensoren (10 bis 14) verbundenen Erfassungseinheit (15) zum Sammeln der erfassten Zustands-Informationen, einer mit der Erfassungseinheit (15) verbindbaren Zentraleinheit (16) zum Auswerten der gesammelten Zustands-Informationen und Ermitteln des Ist-Zustands und der Restlebensdauer aus den gesammelten Zustands-Informationen, sowie einer Anzeigevorrichtung (18) zum Anzeigen des ermittelten Ist-Zustands und der ermittelten Restlebensdauer, wobei die Sensoren (10 bis 14) verschiedene Sensortypen zum Erfassen von zumindest zwei verschiedenen Informationsgattungen aus der Gruppe umfassend Bauteilschwingungen und Schmiermitteleigenschaften umfassen, wobei die genannten Sensoren (10 bis 14) im Inneren eines Getriebes (2, 3) der Bau-, Materialumschlags- und/oder Fördermaschine (1) anordenbar sind und einen Schwingungssensor (11) zum Erfassen der Bauteilschwingungen und zumindest einen der folgenden Sensoren: Ölpartikelsensor (14), Ölviskositätsensor und Ölleitfähigkeitssensor zum Erfassen von Getriebeölpartikeln und/oder Getriebeölzustand umfassen, und dass die Zentraleinheit (16) dazu ausgebildet ist, den Ist-Zustand und die Restlebensdauer anhand der zumindest zwei verschiedenen Informationsgattungen umfassend die vom Schwingungssensor (11) erfassten Bauteilschwingungen und die vom Ölpartikel- und/oder Ölviskositäts- und/oder Ölleitfähigkeitssensor erfassten Getriebeölpartikel und/oder Getriebeölzustand zu bestimmen, wobei die Zentraleinheit (16) einen Trendermittlungsbaustein (21) zum Ermitteln eines Trends, der einen Verlauf von Veränderungen der gesammelten Zustands-Informationen betreffend die Bauteilschwingungen und das Getriebeöl charakterisiert und einen zukünftigen Verlauf prognostiziert, **dadurch gekennzeichnet, dass** die Zentraleinheit eine Gewichtungseinrichtung (23) zum unterschiedlichen Gewichten unterschiedlicher gesammelter Zustands-Informationen und/oder unterschiedlicher daraus abgeleiteter Informationen aufweist, wobei die Zentral-einheit (16) dazu ausgebildet ist, für die Bestimmung der Restlebensdauer den ermittelten Trend der genannten Zustands-Informationen betreffend die Bauteilschwingungen und das Getriebeöl zu berücksichtigen und den Ist-Zustand und die Restlebensdauer unter Berücksichtigung der verschiedenen Gewichtungen der verschiedenen Informationen zu bestimmen, und wobei die Zentraleinheit eine dynamische Beurteilungseinrichtung umfasst, die eingerichtet ist, die Annäherung der mehreren Zustandsinformationen und/oder ein oder mehrerer Trends an einen Grenzwert bei der Bestimmung des Istzustands und der Restlebensdauer nicht immer gleich, sondern dynamisch zu berücksichtigen, so dass bei nur leichter Überschreitung einer der erfaßten Zustands-Informationen oder Trends über einen vorbestimmten Schwellwert, wenn alle anderen Zustands-Informationen oder Trends noch auf der guten Seite der jeweiligen Schwellwerte liegen, die genannte Überschreitung des einen Schwellwerts noch als unproblematisch für die Restlebensdauer gewertet werden kann.

2. Vorrichtung nach dem vorhergehenden Anspruch, wobei die Sensoren ferner zumindest zwei der folgenden Sensoren aufweisen: Drehmomentsensor (10), Drehzahlsensor, Temperatursensor (12), Kraftsensor, Ölstandssensor, Dielektrizitätssensor und Feuchtigkeitssensor.

3. Vorrichtung nach einem der vorhergehenden Ansprüche, wobei die Sensoren (10 bis 14) gemeinsam von der Erfassungseinheit (15) energieversorgt sind, wobei die Erfassungseinheit (10) einen Energieversorgungseingang aufweist, der an die Bau-, Materialumschlags- und/oder Fördermaschine (1) anschliessbar ist, und einen Energieversorgungsausgang besitzt, der an die Sensoren (10 bis 14) angeschlossen ist.

4. Vorrichtung nach einem der vorhergehenden Ansprüche, wobei das Getriebe (2) ein Drehwerksgetriebe zum Verdrehen einer Drehbühne (4) der Bau-, Materialumschlags- und/oder Fördermaschine (1) gegenüber deren Unterwagen (5) ist oder ein Fahrantriebsgetriebe (3) zum Antreiben eines Kettenfahrwerks oder eines Radantriebs ist.

5. Vorrichtung nach einem der vorhergehenden Ansprüche, wobei die Erfassungseinheit (15) einen Datenverarbeitungsbaustein zum Vorverdichten und/oder Klassifizieren der gesammelten Zustands-Informationen der Sensoren (10 bis 14) umfasst und dazu ausgebildet ist, der Zentraleinheit (16) vorverdichtete und/oder klassifizierte Zustands-Informationen zu übermitteln, wobei die Erfassungseinheit (15) einen Schwingungsanalysebaustein zum Analysieren der Zustands-Informationen eines Schwingungssensors (11) und Bestimmen von Schwingungsspektren und/oder charakteristischer Schwingungskennwerte aufweist, und die Zentraleinheit (16) dazu ausgebildet ist, für die Bestimmung des Ist-Zustands und der Restlebensdauer die von der Erfassungseinheit (15) übermittelten Schwingungsspektren und/oder der übermittelten charakteristischen Schwingungskennwerte zu berücksichtigen.

6. Vorrichtung nach Anspruch 2 oder einem der auf Anspruch 2 rückbezogenen Ansprüche, wobei die Erfassungseinheit (15) einen Verknüpfungs- und/oder Verrechnungsbaustein zum Verknüpfen und/oder Verrechnen der gesammelten, von den Sensoren (10 bis 11) empfangenen Zustands-Informationen aufweist, wobei der genannte Verknüpfungs- und/oder Verrechnungsbaustein dazu konfiguriert ist,
- aus gesammelten Temperaturwerten eines Temperatursensors (12) Temperaturdifferenzen zu bestimmen, und/oder
- aus Drehzahl- und/oder Drehmomentwerten eines Drehzahl-/Drehmomentsensors (10) eine Getriebe- und/oder Antriebsleistung zu berechnen, und/oder
- aus einem Drehmomentwert eines Drehmomentsensors (10) unter Verwendung einer Getriebeübersetzungs-Information und eines Wirkungsgradkennfelds ein Abtriebs- oder Eingangsdrehmoment zu berechnen.

7. Vorrichtung nach einem der vorhergehenden Ansprüche, wobei die Zentral-einheit (16) einen Analysebaustein (20) zum Analysieren der von der Erfassungseinheit (15) gesammelten Zustands-Informationen und zum Analysieren der von der Erfassungseinheit (15) übermittelten, vorab bearbeiteten Zustands-Informationen aufweist, wobei der Analysebaustein (20) dazu konfiguriert ist, von der Erfassungseinheit (15) übermittelte Schwingungsspektren und/oder charakteristische Schwingungskennwerte und/oder von der Erfassungseinheit (15) übermittelte Temperaturdifferenzen und/oder von der Erfassungseinheit (15) bestimmte Leistungswerte und/oder von der Erfassungseinheit (15) ermittelte Abtriebs- und/oder Eingangsdrehmomente für die Bestimmung des Ist-Zustands und/oder der Restlebensdauer des Getriebes (2, 3) der Bau-, Materialumschlags- und/oder Fördermaschine (1) zu berücksichtigen.

8. Vorrichtung nach dem vorhergehenden Anspruch, wobei der Trendermittlungsbaustein (21) dazu konfiguriert ist, eine den Verlauf der Veränderungen der gesammelten Zustands-Informationen und/oder der daraus abgeleiteten Informationen annähernde Funktion zu extrapolieren und aus dem extrapolierten Verlauf der Funktion den zukünftigen Trend zu bestimmen.

9. Vorrichtung nach einem der vorhergehenden Ansprüche, wobei die Zentral-einheit (16) eine Vergleichseinrichtung (22) zum Vergleichen der gesammelten Zustands-Informationen und/oder daraus abgeleiteter Informationen mit Grenzwerten und/oder mit vorbestimmten Bereichen aufweist, wobei die Zentraleinheit (16) dazu ausgebildet ist, aus dem Abstand der Ist-Werte der gesammelten Zustands-Informationen und/oder der daraus abgeleiteten Informationen von den genannten Grenzwerten und/oder den genannten Bereichsgrenzen die Restlebensdauer der Bau-, Materialumschlags- und/oder Fördermaschine zu bestimmen.

10. Vorrichtung nach einem der vorhergehenden Ansprüche, wobei die Gewichtungseinrichtung (23) dazu ausgebildet ist, einem Vibrationssignal eines Vibrationssensors (11) und/oder einem daraus abgeleiteten Vibrationskennwert eine andere Gewichtung zu verleihen als einem Temperaturwert eines Temperatursensors (12) und/oder einem daraus abgeleiteten Temperaturkennwert, und/oder dazu ausgebildet ist, einer Drehzahl- und/oder Drehmomentinformation eines Drehzahl- und/oder Drehmomentsensors (10) und/oder einem daraus abgeleiteten Drehmoment und/oder Drehzahlkennwert eine andere Gewichtung zu verleihen als einer Ölzustandsinformation eines Ölzustands- und/oder Ölpartikelsensors (13, 14), wobei die Gewichtungseinrichtung (23) dazu ausgebildet ist, unterschiedlichen Zustands-Informationen unterschiedlicher Sensoren (10 bis 14) und/oder unterschiedlichen daraus abgeleiteten Informationen auf Basis der für die genannten Zustands-Informationen und/oder daraus abgeleiteten Informationen bestimmten Trends unterschiedliche Gewichtungen zu verleihen.

11. Vorrichtung nach einem der vorhergehenden Ansprüche, wobei die dynamische Beurteilungseinrichtung (24) dazu ausgebildet ist, Abweichungsschwellwerte in Abhängigkeit der Anzahl an Zustands-Informationen und/oder daraus abgeleiteter Informationen mit Abweichungen von Schwellwerten dynamisch anzupassen.

12. Vorrichtung nach einem der vorhergehenden Ansprüche, wobei die Zentral-einheit (16) dazu ausgebildet ist, für die Bestimmung des Ist-Zustands und/oder der Restlebensdauer die Historie der gesammelten Zustands-Informationen und/oder daraus abgeleiteter Informationen zu berücksichtigen, wobei die berücksichtigte Historie zumindest eine der folgenden Historien umfasst: eine Historie gesammelter Temperaturwerte, eine Historie gesammelter Schwingungskennwerte, eine Historie gesammelter Drehmoment- und/oder Drehzahlwerte und eine Historie gesammelter Ölzustands- und/oder -partikelwerte.

13. Vorrichtung nach einem der vorhergehenden Ansprüche, wobei die Anzeigevorrichtung (18) zumindest ein Display (26) an der Bau-, Materialumschlags- und/oder Fördermaschine (1) und/oder zumindest ein Display bei einem Maschinenhersteller und/oder ein Display bei einem Maschinenbetreiber aufweist.

14. Vorrichtung nach einem der vorhergehenden Ansprüche, wobei die Anzeigevorrichtung (18) zumindest ein Display (26) aufweist, auf dem zwei separate Anzeigefelder (27, 28) dargestellt sind, wobei das eine Anzeigefeld (27) eine Darstellung der überwachten Bau-, Materialumschlags- und/oder Fördermaschine (1) und deren durch die Sensoren (10 bis 14) überwachten Maschinenkomponenten enthält und das andere Anzeigefeld (28) eine grafische Darstellung des Ist-Zustands und der Restlebensdauer der in dem anderen Anzeigefeld (27) dargestellten Maschinenkomponenten (2, 3) enthält, wobei zumindest das Anzeigefeld (27) zur Darstellung der Bau-, Materialumschlags- und/oder Fördermaschine (1) und der sensorisch überwachten Maschinenkomponenten (2, 3) berührungsempfindlich, insbesondere als Touchscreen, ausgebildet ist, wobei die Anzeigevorrichtung (18) eine Steuervorrichtung aufweist, die dazu konfiguriert ist, bei Berühren des Bereichs des Anzeigefelds (27), in dem eine bestimmte Maschinenkomponente der Bau-, Materialumschlags- und/oder Fördermaschine (1) dargestellt ist, das andere Anzeigefeld (28) umzukonfigurieren und/oder derart anzusteuern, dass auf dem genannten anderen Anzeigefeld (28) der Ist-Zustand und die Restlebensdauer der in dem berührten Anzeigefeld dargestellten Maschinenkomponente angezeigt wird.

15. Vorrichtung nach einem der vorhergehenden Ansprüche, wobei die Zentral-einheit (16) dazu konfiguriert ist, bei oder nach Bestimmen einer Restlebensdauer, die eine vorbestimmte Zeitspanne unterschreitet, ein Warnsignal und/oder Wartungssignal bereitzustellen.

16. Vorrichtung nach einer der vorhergehenden Ansprüche, wobei die Zentral-einheit (16) permanent oder befristet drahtgebunden oder über eine drahtlose Anbindung mit der Erfassungseinheit (15) verbunden ist, und wobei die Zentral- (16) und Speichereinheit (17) entweder permanent oder befristet drahtgebunden oder drahtlos mit der Visualisierungseinheit verbunden sind.

17. Vorrichtung nach einem der vorhergehenden Ansprüche, wobei die Zentral-einheit (16) sich entweder direkt auf der Bau-, Materialumschlags- und/oder Fördermaschine befindet oder an einem Ort in Form eines zentralen Servers oder einer Cloud installiert ist, wobei die Verarbeitung oder eine Teilverarbeitung der Daten, insbesondere eine Restlebensdauerberechnung, Trendbildung und/oder Grenzwertüberwachung, bereits in der Erfassungseinheit (15) erfolgt oder in der Zentraleinheit (16).

## Claims

1. Device for determining the actual condition and the remaining service life of a transmission (2, 3) of a construction, material handling and/or conveying machine (1), with a plurality of sensors (10 to 14) provided on the construction, material handling and/or conveying machine (1) for detecting various condition information, a detection unit (15) connected to the sensors (10 to 14) for collecting the detected condition information, a central unit (16) connectable to the detection unit (15) for evaluating the collected condition information and determining the actual condition and the remaining service life from the collected condition information, as well as a display device (18) for displaying the determined actual condition and the determined remaining service life, wherein the sensors (10 to 14) comprise various sensor types for detecting at least two different information categories from the group comprising component vibrations and lubricant properties, wherein the said sensors (10 to 14) are arrangeable in the interior of a transmission (2, 3) of the construction, material handling and/or conveying machine (1) and comprise a vibration sensor (11) for detecting the component vibrations and at least one of the following sensors: oil particle sensor (14), oil viscosity sensor and oil conductivity sensor for detecting transmission oil particles and/or transmission oil condition, and that the central unit (16) is configured to determine the actual condition and the remaining service life on the basis of the at least two different information categories comprising the component vibrations detected by the vibration sensor (11) and the transmission oil particles and/or transmission oil condition detected by the oil particle and/or oil viscosity and/or oil conductivity sensor, wherein the central unit (16) comprises a trend determination module (21) for determining a trend that characterizes a course of changes of the collected condition information concerning the component vibrations and the transmission oil and predicts a future course, **characterized in that** the central unit comprises a weighting device (23) for differently weighting different collected condition information and/or different information derived therefrom, wherein the central unit (16) is configured to take into account, for the determination of the remaining service life, the determined trend of the said condition information concerning the component vibrations and the transmission oil and to determine the actual condition and the remaining service life taking into account the various weightings of the various information, and wherein the central unit comprises a dynamic assessment device which is configured to take into account the approach of the plurality of condition information and/or one or more trends to a limit value in the determination of the actual condition and the remaining service life not always equally, but dynamically, such that in the case of only a slight exceedance of one of the detected condition information or trends beyond a predetermined threshold value, when all other condition information or trends still lie on the good side of the respective threshold values, the said exceedance of the one threshold value can still be evaluated as unproblematic for the remaining service life.

2. Device according to the preceding claim, wherein the sensors further comprise at least two of the following sensors: torque sensor (10), rotational speed sensor, temperature sensor (12), force sensor, oil level sensor, dielectric sensor and humidity sensor.

3. Device according to one of the preceding claims, wherein the sensors (10 to 14) are jointly supplied with energy by the detection unit (15), wherein the detection unit (10) has an energy supply input that is connectable to the construction, material handling and/or conveying machine (1), and has an energy supply output that is connected to the sensors (10 to 14).

4. Device according to one of the preceding claims, wherein the transmission (2) is a slewing gear transmission for rotating a slewing platform (4) of the construction, material handling and/or conveying machine (1) relative to its undercarriage (5) or is a travel drive transmission (3) for driving a crawler track or a wheel drive.

5. Device according to one of the preceding claims, wherein the detection unit (15) comprises a data processing module for pre-compressing and/or classifying the collected condition information of the sensors (10 to 14) and is configured to transmit pre-compressed and/or classified condition information to the central unit (16), wherein the detection unit (15) comprises a vibration analysis module for analyzing the condition information of a vibration sensor (11) and determining vibration spectra and/or characteristic vibration parameters, and the central unit (16) is configured to take into account, for the determination of the actual condition and the remaining service life, the vibration spectra transmitted by the detection unit (15) and/or the transmitted characteristic vibration parameters.

6. Device according to claim 2 or one of the claims dependent on claim 2, wherein the detection unit (15) comprises a linking and/or computing module for linking and/or computing the collected condition information received from the sensors (10 to 11), wherein the said linking and/or computing module is configured to,
- determine temperature differences from collected temperature values of a temperature sensor (12), and/or
- calculate a transmission and/or drive power from rotational speed and/or torque values of a rotational speed/torque sensor (10), and/or
- calculate an output or input torque from a torque value of a torque sensor (10) using a transmission ratio information and an efficiency map.

7. Device according to one of the preceding claims, wherein the central unit (16) comprises an analysis module (20) for analyzing the condition information collected by the detection unit (15) and for analyzing the preprocessed condition information transmitted by the detection unit (15), wherein the analysis module (20) is configured to take into account, for the determination of the actual condition and/or the remaining service life of the transmission (2, 3) of the construction, material handling and/or conveying machine (1), vibration spectra transmitted by the detection unit (15) and/or characteristic vibration parameters and/or temperature differences transmitted by the detection unit (15) and/or power values determined by the detection unit (15) and/or output and/or input torques determined by the detection unit (15).

8. Device according to the preceding claim, wherein the trend determination module (21) is configured to extrapolate a function approximating the course of the changes of the collected condition information and/or of the information derived therefrom and to determine the future trend from the extrapolated course of the function.

9. Device according to one of the preceding claims, wherein the central unit (16) comprises a comparison device (22) for comparing the collected condition information and/or information derived therefrom with limit values and/or with predetermined ranges, wherein the central unit (16) is configured to determine the remaining service life of the construction, material handling and/or conveying machine from the distance of the actual values of the collected condition information and/or of the information derived therefrom from the said limit values and/or the said range limits.

10. Device according to one of the preceding claims, wherein the weighting device (23) is configured to assign a different weighting to a vibration signal of a vibration sensor (11) and/or to a vibration parameter derived therefrom than to a temperature value of a temperature sensor (12) and/or to a temperature parameter derived therefrom, and/or is configured to assign a different weighting to a rotational speed and/or torque information of a rotational speed and/or torque sensor (10) and/or to a torque and/or rotational speed parameter derived therefrom than to an oil condition information of an oil condition and/or oil particle sensor (13, 14), wherein the weighting device (23) is configured to assign different weightings to different condition information of different sensors (10 to 14) and/or to different information derived therefrom on the basis of the trends determined for the said condition information and/or information derived therefrom.

11. Device according to one of the preceding claims, wherein the dynamic assessment device (24) is configured to dynamically adapt deviation threshold values as a function of the number of condition information and/or information derived therefrom with deviations from threshold values.

12. Device according to one of the preceding claims, wherein the central unit (16) is configured to take into account, for the determination of the actual condition and/or the remaining service life, the history of the collected condition information and/or of information derived therefrom, wherein the history taken into account comprises at least one of the following histories: a history of collected temperature values, a history of collected vibration parameters, a history of collected torque and/or rotational speed values and a history of collected oil condition and/or oil particle values.

13. Device according to one of the preceding claims, wherein the display device (18) comprises at least one display (26) on the construction, material handling and/or conveying machine (1) and/or at least one display at a machine manufacturer and/or a display at a machine operator.

14. Device according to one of the preceding claims, wherein the display device (18) comprises at least one display (26) on which two separate display fields (27, 28) are presented, wherein the one display field (27) contains a representation of the monitored construction, material handling and/or conveying machine (1) and its machine components monitored by the sensors (10 to 14) and the other display field (28) contains a graphical representation of the actual condition and the remaining service life of the machine components (2, 3) shown in the other display field (27), wherein at least the display field (27) for representing the construction, material handling and/or conveying machine (1) and the sensor-monitored machine components (2, 3) is configured to be touch-sensitive, in particular as a touchscreen, wherein the display device (18) comprises a control device which is configured, upon touching of the region of the display field (27) in which a particular machine component of the construction, material handling and/or conveying machine (1) is shown, to reconfigure and/or control the other display field (28) in such a way that on the said other display field (28) the actual condition and the remaining service life of the machine component shown in the touched display field is displayed.

15. Device according to one of the preceding claims, wherein the central unit (16) is configured to provide a warning signal and/or maintenance signal upon or after determination of a remaining service life that falls below a predetermined time span.

16. Device according to one of the preceding claims, wherein the central unit (16) is permanently or temporarily connected to the detection unit (15) in a wired manner or via a wireless connection, and wherein the central unit (16) and storage unit (17) are connected to the visualization unit either permanently or temporarily in a wired or wireless manner.

17. Device according to one of the preceding claims, wherein the central unit (16) is located either directly on the construction, material handling and/or conveying machine or is installed at a location in the form of a central server or a cloud, wherein the processing or a partial processing of the data, in particular a remaining service life calculation, trend formation and/or limit value monitoring, already takes place in the detection unit (15) or in the central unit (16).

## Revendications

1. Dispositif pour déterminer l'état actuel et la durée de vie résiduelle d'une transmission (2, 3) d'une machine de construction, de manutention de matériaux et/ou de transport (1), comprenant une pluralité de capteurs (10 à 14) prévus sur la machine de construction, de manutention de matériaux et/ou de transport (1) pour détecter diverses informations d'état, une unité de détection (15) reliée aux capteurs (10 à 14) pour collecter les informations d'état détectées, une unité centrale (16) pouvant être reliée à l'unité de détection (15) pour évaluer les informations d'état collectées et déterminer l'état actuel et la durée de vie résiduelle à partir des informations d'état collectées, ainsi qu'un dispositif d'affichage (18) pour afficher l'état actuel déterminé et la durée de vie résiduelle déterminée, dans lequel les capteurs (10 à 14) comprennent divers types de capteurs pour détecter au moins deux catégories d'informations différentes du groupe comprenant les vibrations de composants et les propriétés du lubrifiant, dans lequel lesdits capteurs (10 à 14) peuvent être disposés à l'intérieur d'une transmission (2, 3) de la machine de construction, de manutention de matériaux et/ou de transport (1) et comprennent un capteur de vibrations (11) pour détecter les vibrations de composants et au moins l'un des capteurs suivants : capteur de particules d'huile (14), capteur de viscosité d'huile et capteur de conductivité d'huile pour détecter des particules d'huile de transmission et/ou l'état de l'huile de transmission, et que l'unité centrale (16) est conçue pour déterminer l'état actuel et la durée de vie résiduelle sur la base des au moins deux catégories d'informations différentes comprenant les vibrations de composants détectées par le capteur de vibrations (11) et les particules d'huile de transmission et/ou l'état de l'huile de transmission détectés par le capteur de particules d'huile et/ou de viscosité d'huile et/ou de conductivité d'huile, dans lequel l'unité centrale (16) comprend un module de détermination de tendance (21) pour déterminer une tendance qui caractérise une évolution des changements des informations d'état collectées concernant les vibrations de composants et l'huile de transmission et pronostique une évolution future, **caractérisé en ce que** l'unité centrale comprend un dispositif de pondération (23) pour pondérer différemment différentes informations d'état collectées et/ou différentes informations qui en sont dérivées, dans lequel l'unité centrale (16) est conçue pour prendre en compte, pour la détermination de la durée de vie résiduelle, la tendance déterminée desdites informations d'état concernant les vibrations de composants et l'huile de transmission et pour déterminer l'état actuel et la durée de vie résiduelle en tenant compte des différentes pondérations des différentes informations, et dans lequel l'unité centrale comprend un dispositif d'évaluation dynamique qui est conçu pour prendre en compte le rapprochement de la pluralité d'informations d'état et/ou d'une ou de plusieurs tendances d'une valeur limite lors de la détermination de l'état actuel et de la durée de vie résiduelle non pas toujours de la même manière, mais de manière dynamique, de telle sorte que, en cas de léger dépassement seulement de l'une des informations d'état ou tendances détectées au-delà d'une valeur seuil prédéterminée, lorsque toutes les autres informations d'état ou tendances se situent encore du bon côté des valeurs seuils respectives, ledit dépassement de l'une des valeurs seuils peut encore être évalué comme non problématique pour la durée de vie résiduelle.

2. Dispositif selon la revendication précédente, dans lequel les capteurs comprennent en outre au moins deux des capteurs suivants : capteur de couple (10), capteur de vitesse de rotation, capteur de température (12), capteur de force, capteur de niveau d'huile, capteur de constante diélectrique et capteur d'humidité.

3. Dispositif selon l'une des revendications précédentes, dans lequel les capteurs (10 à 14) sont alimentés en énergie conjointement par l'unité de détection (15), dans lequel l'unité de détection (10) présente une entrée d'alimentation en énergie qui peut être raccordée à la machine de construction, de manutention de matériaux et/ou de transport (1), et possède une sortie d'alimentation en énergie qui est raccordée aux capteurs (10 à 14).

4. Dispositif selon l'une des revendications précédentes, dans lequel la transmission (2) est une transmission de mécanisme d'orientation pour faire pivoter une plate-forme tournante (4) de la machine de construction, de manutention de matériaux et/ou de transport (1) par rapport à son châssis inférieur (5) ou est une transmission d'entraînement de translation (3) pour entraîner un train de chenilles ou un entraînement à roues.

5. Dispositif selon l'une des revendications précédentes, dans lequel l'unité de détection (15) comprend un module de traitement de données pour précom-presser et/ou classifier les informations d'état collectées des capteurs (10 à 14) et est conçue pour transmettre à l'unité centrale (16) des informations d'état précompressées et/ou classifiées, dans lequel l'unité de détection (15) comprend un module d'analyse de vibrations pour analyser les informations d'état d'un capteur de vibrations (11) et déterminer des spectres de vibrations et/ou des valeurs caractéristiques de vibrations, et l'unité centrale (16) est conçue pour prendre en compte, pour la détermination de l'état actuel et de la durée de vie résiduelle, les spectres de vibrations transmis par l'unité de détection (15) et/ou les valeurs caractéristiques de vibrations transmises.

6. Dispositif selon la revendication 2 ou l'une des revendications dépendantes de la revendication 2, dans lequel l'unité de détection (15) comprend un module de liaison et/ou de calcul pour lier et/ou calculer les informations d'état collectées reçues des capteurs (10 à 11), dans lequel ledit module de liaison et/ou de calcul est configuré pour,
- déterminer des différences de température à partir de valeurs de température collectées d'un capteur de température (12), et/ou
- calculer une puissance de transmission et/ou d'entraînement à partir de valeurs de vitesse de rotation et/ou de couple d'un capteur de vitesse de rotation/couple (10), et/ou
- calculer un couple de sortie ou d'entrée à partir d'une valeur de couple d'un capteur de couple (10) en utilisant une information de rapport de transmission et un champ caractéristique de rendement.

7. Dispositif selon l'une des revendications précédentes, dans lequel l'unité centrale (16) comprend un module d'analyse (20) pour analyser les informations d'état collectées par l'unité de détection (15) et pour analyser les informations d'état prétraitées transmises par l'unité de détection (15), dans lequel le module d'analyse (20) est configuré pour prendre en compte, pour la détermination de l'état actuel et/ou de la durée de vie résiduelle de la transmission (2, 3) de la machine de construction, de manutention de matériaux et/ou de transport (1), des spectres de vibrations transmis par l'unité de détection (15) et/ou des valeurs caractéristiques de vibrations et/ou des différences de température transmises par l'unité de détection (15) et/ou des valeurs de puissance déterminées par l'unité de détection (15) et/ou des couples de sortie et/ou d'entrée déterminés par l'unité de détection (15).

8. Dispositif selon la revendication précédente, dans lequel le module de détermination de tendance (21) est configuré pour extrapoler une fonction ap-proximant l'évolution des changements des informations d'état collectées et/ou des informations qui en sont dérivées et pour déterminer la tendance future à partir de l'évolution extrapolée de la fonction.

9. Dispositif selon l'une des revendications précédentes, dans lequel l'unité centrale (16) comprend un dispositif de comparaison (22) pour comparer les informations d'état collectées et/ou les informations qui en sont dérivées avec des valeurs limites et/ou avec des plages prédéterminées, dans lequel l'unité centrale (16) est conçue pour déterminer la durée de vie résiduelle de la machine de construction, de manutention de matériaux et/ou de transport à partir de la distance des valeurs réelles des informations d'état collectées et/ou des informations qui en sont dérivées par rapport auxdites valeurs limites et/ou auxdites limites de plage.

10. Dispositif selon l'une des revendications précédentes, dans lequel le dispositif de pondération (23) est conçu pour attribuer à un signal de vibration d'un capteur de vibration (11) et/ou à une valeur caractéristique de vibration qui en est dérivée une pondération différente de celle attribuée à une valeur de température d'un capteur de température (12) et/ou à une valeur caractéristique de température qui en est dérivée, et/ou est conçu pour attribuer à une information de vitesse de rotation et/ou de couple d'un capteur de vitesse de rotation et/ou de couple (10) et/ou à une valeur caractéristique de couple et/ou de vitesse de rotation qui en est dérivée une pondération différente de celle attribuée à une information d'état d'huile d'un capteur d'état d'huile et/ou de particules d'huile (13, 14), dans lequel le dispositif de pondération (23) est conçu pour attribuer des pondérations différentes à différentes informations d'état de différents capteurs (10 à 14) et/ou à différentes informations qui en sont dérivées sur la base des tendances déterminées pour lesdites informations d'état et/ou les informations qui en sont dérivées.

11. Dispositif selon l'une des revendications précédentes, dans lequel le dispositif d'évaluation dynamique (24) est conçu pour adapter dynamiquement des valeurs seuils d'écart en fonction du nombre d'informations d'état et/ou d'informations qui en sont dérivées présentant des écarts par rapport à des valeurs seuils.

12. Dispositif selon l'une des revendications précédentes, dans lequel l'unité centrale (16) est conçue pour prendre en compte, pour la détermination de l'état actuel et/ou de la durée de vie résiduelle, l'historique des informations d'état collectées et/ou des informations qui en sont dérivées, dans lequel l'historique pris en compte comprend au moins l'un des historiques suivants : un historique de valeurs de température collectées, un historique de valeurs caractéristiques de vibrations collectées, un historique de valeurs de couple et/ou de vitesse de rotation collectées et un historique de valeurs d'état d'huile et/ou de particules d'huile collectées.

13. Dispositif selon l'une des revendications précédentes, dans lequel le dispositif d'affichage (18) comprend au moins un écran (26) sur la machine de construction, de manutention de matériaux et/ou de transport (1) et/ou au moins un écran chez un fabricant de machines et/ou un écran chez un exploitant de machines.

14. Dispositif selon l'une des revendications précédentes, dans lequel le dispositif d'affichage (18) comprend au moins un écran (26) sur lequel sont représentés deux champs d'affichage séparés (27, 28), dans lequel l'un des champs d'affichage (27) contient une représentation de la machine de construction, de manutention de matériaux et/ou de transport (1) surveillée et de ses composants de machine surveillés par les capteurs (10 à 14) et l'autre champ d'affichage (28) contient une représentation graphique de l'état actuel et de la durée de vie résiduelle des composants de machine (2, 3) représentés dans l'autre champ d'affichage (27), dans lequel au moins le champ d'affichage (27) destiné à la représentation de la machine de construction, de manutention de matériaux et/ou de transport (1) et des composants de machine surveillés par capteurs (2, 3) est conçu pour être tactile, en particulier sous forme d'écran tactile, dans lequel le dispositif d'affichage (18) comprend un dispositif de commande qui est configuré, lors du toucher de la zone du champ d'affichage (27) dans laquelle un composant de machine déterminé de la machine de construction, de manutention de matériaux et/ou de transport (1) est représenté, pour reconfigurer et/ou commander l'autre champ d'affichage (28) de telle manière que, sur ledit autre champ d'affichage (28), l'état actuel et la durée de vie résiduelle du composant de machine représenté dans le champ d'affichage touché soient affichés.

15. Dispositif selon l'une des revendications précédentes, dans lequel l'unité centrale (16) est configurée pour fournir un signal d'avertissement et/ou un signal de maintenance lors de ou après la détermination d'une durée de vie résiduelle qui est inférieure à un laps de temps prédéterminé.

16. Dispositif selon l'une des revendications précédentes, dans lequel l'unité centrale (16) est reliée à l'unité de détection (15) de manière permanente ou temporaire, par voie filaire ou par une liaison sans fil, et dans lequel l'unité centrale (16) et l'unité de mémoire (17) sont reliées à l'unité de visualisation soit de manière permanente, soit de manière temporaire, par voie filaire ou sans fil.

17. Dispositif selon l'une des revendications précédentes, dans lequel l'unité centrale (16) se trouve soit directement sur la machine de construction, de manutention de matériaux et/ou de transport, soit est installée en un lieu sous la forme d'un serveur central ou d'un nuage, dans lequel le traitement ou un traitement partiel des données, en particulier un calcul de durée de vie résiduelle, une formation de tendance et/ou une surveillance de valeurs limites, s'effectue déjà dans l'unité de détection (15) ou dans l'unité centrale (16).
